# EUROPÄISCHE PATENTSCHRIFT

(11) **EP 2 416 997 B1**
(45) Veröffentlichungstag und Bekanntmachung des Hinweises auf die Patenterteilung: **18.01.2017**
(21) Anmeldenummer: 10715750.5
(22) Anmeldetag: 29.03.2010
(51) Int. Cl.: B60G 17/052, B61F 5/14, B61F 5/24, B60G 17/015

(54) **VERFAHREN ZUR STEUERUNG EINER LUFTFEDERANORDNUNG EINES FAHRZEUGES**
METHOD FOR CONTROLLING A PNEUMATIC SPRING ASSEMBLY OF A MOTOR VEHICLE
PROCÉDÉ DE COMMANDE D'UN AGENCEMENT AMORTISSEUR PNEUMATIQUE D'UN VÉHICULE

(30) Priorität: 07.04.2009 AT 5432009
(43) Veröffentlichungstag der Anmeldung: 15.02.2012
(73) Patentinhaber: Siemens AG Österreich, 1210 Wien (AT)
(72) Erfinder: TEICHMANN, Martin, A-8045 Graz (AT); HOJAK, Gerhard, A-8020 Graz (AT); SIX, Klaus, A-8503 Stainztal (AT)
(74) Vertreter: Maier, Daniel Oliver
(86) Internationale Anmeldenummer: PCT/EP2010/054058
(87) Internationale Veröffentlichungsnummer: WO 2010/115739

(56) Entgegenhaltungen:
- DE-U1- 29 620 200
- GB-A- 2 414 816
- US-A- 5 432 700

## Beschreibung

Die Erfindung betrifft ein Verfahren zur Steuerung einer Luftfederanordnung eines Fahrzeuges (siehe z.B. DE 296 20 200 U1, dem Oberbegriff entsprechend).

Luftfederanordnungen dienen bei Schienenfahrzeugen üblicherweise als Sekundärfedern zwischen Wagenkasten und Fahrwerk zur elastischen Lagerung des Wagenkastens. Sie entkoppeln ihn weitgehend von den Unregelmäßigkeiten der Gleisanlage und ermöglichen ein Ausregeln der durch Beladungsänderungen in Stationen hervorgerufenen Höhenänderungen des Wagenkastens relativ zum Fahrwerkrahmen.

Dazu ist aus der o.g. DE 296 20 200 U1 eine Luftfederung mit einem elektropneumatischen Luftsteuerventil bekannt, bei der zur Regulierung der Höhenlage des Fahrzeugaufbaues relativ zum Fahrwerkrahmen dieselbe durch einen Höhengeber mit einem elektrischen Ausgangssignal erfasst wird.

Mit dieser Federung ist einerseits eine genaue Erfassung der Höhenlage möglich, andererseits kann die Charakteristik der Federung an unterschiedliche Betriebsmodi angepasst werden, sodass beispielsweise im stehenden Betrieb die exakte Einstellung der Höhenlage des Fahrzeugkastens relativ zum Fahrwerkrahmen im Vordergrund steht, während hingegen bei dynamischen Belastungen während der Fahrt ein Nichtreagieren auf beispielsweise Wankbewegungen erreicht werden kann.

Aus der AT 503 256 A2 ist eine Luftfederanordnung bekannt, bei der in eine Luftaustauschleitung zwischen einem Luftfedersteuerventil und der Luftfeder ein Schaltmittel eingefügt ist, mit dem die Luftströmung in der Luftaustauschleitung gedrosselt oder unterbrochen werden kann, sodass sich unterschiedliche Eigenschaften der Höhenregelung der Luftfederanordnung einstellen lassen.

Der Erfindung liegt die Aufgabe zugrunde den genannten Stand der Technik weiterzuentwickeln.

Dies geschieht erfindungsgemäß mit einem Verfahren zur Steuerung einer Luftfederanordnung eines Fahrzeuges gemäss Anspruch 1, bei dem aus dem Zustand des Fahrzeuges diskrete Zustandsparameter abgeleitet werden, die zu Parametersätzen zusammengefasst werden, bei dem weiterhin jedem Parametersatz ein definiertes Höhenregelungsverhalten zugeordnet wird, und bei dem durch entsprechende Ansteuerung zumindest eines Ventils der Luftfederanordnung ein einem bestimmten Zustand des Fahrzeuges zugeordnetes Höhenregelungsverhalten eingestellt wird.

Erfindungsgemäß wird der Zustand eines Fahrzeuges durch eine begrenzte Anzahl von Parametersätzen beschrieben, auf deren Basis in der Folge ein Höhenregelungsverhalten eingestellt wird.

Damit wird eine einfache Realisierung des Verfahrens mit elektronisch steuerbaren Ventilen ermöglicht.

Ein wesentlicher Parameter zur Beschreibung des Zustandes eines Fahrzeuges kann aus einem Druckwert der Luftfederanordnung abgeleitet werden.

Sehr wichtig für die Einstellung des Höhenregelungsverhaltens ist der Betriebsmodus des Fahrzeuges, d.h. die Frage, ob sich das Fahrzeug im Stillstand, an einem Bahnsteig, auf freier Strecke mit hoher oder niedriger Geschwindigkeit befindet und ggf. auch wie der Zustand der Strecke selbst ist.

Besonders vorteilhaft ist es, wenn durch entsprechende Ansteuerung zumindest eines Ventils der Luftfederanordnung eine bestimmte Höhe des Wagenkastens gegenüber dem Fahrweg eingestellt wird, wobei aus einem Druckwert der Luftfederanordnung das Verhalten einer Primärfederung des Fahrwerkes abgeleitet wird.

Beim Halt eines Schienenfahrzeuges an einem Bahnsteig ist das Anheben des Bodenniveaus des Fahrzeugkastens auf die Höhe der Bahnsteigkante eine wesentliche Forderung. Mit der erfindungsgemäßen Berücksichtigung des Federweges der Primärfederung bei der Einstellung des Höhenregelungsverhaltens kann diese Forderung sehr präzise erfüllt werden.

Erfindungsgemäss wird als Ventil der Luftfederanordnung zumindest ein elektronisch steuerbares Proportionalventil vorgesehen. Derartige Ventile mit zum Teil integrierten Drucksensoren sind einfach anzusteuern und durch vielfachen Einsatz erprobt.

Zur Verhinderung einer unkontrollierten Luftströmung in die Luftfeder in einem Fehlerfall ist es günstig, wenn ein weiteres Ventil vorgesehen wird, welches in diesem Fall betätigt wird und ein unkontrolliertes Anheben des Wagenkastens durch Ablassen von Luft verhindert.

Die Erfindung wird anhand eines in den Figuren dargestellten Ausführungsbeispieles näher erläutert.

Es zeigen beispielhaft:
Fig.1 den schematischen Aufbau einer Luftfederanordnung
Fig. 2 die Kennlinie eines Ventils der Luftfederanordnung

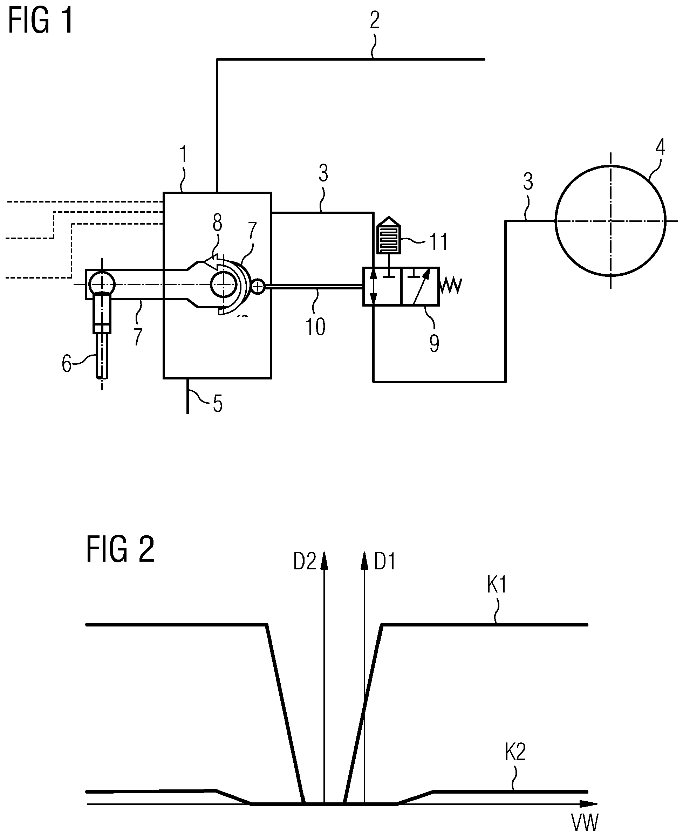

Die Luftfederanordnung gemäß Fig. 1 umfasst ein elektronisch steuerbares Proportionalventil 1 mit integriertem Drucksensor und einer ebenfalls integrierten Steuerlogik, die beispielsweise mittels Mikrocontroller realisiert ist.

Mit diesem Proportionalventil 1 wird die Luftzufuhr von einem nicht dargestellten Vorratsluftbehälter über eine Luftbehälterleitung 2 und eine Luftfederleitung 3 zur Luftfeder 4 bzw. die Luftabfuhr von der Luftfeder 4 über die Luftfederleitung 3 und den Ablass 5 in die Umgebung und damit das Höhenregelungsverhalten der Luftfeder 4 gesteuert.

Als Parameter für die Steuerung dienen der Abstand des Wagenkastens vom Fahrwerkrahmen, der Druck im Ventil und Informationen über den Betriebsmodus des Fahrzeuges.

Der Abstand des Wagenkastens vom Fahrwerkrahmen wird über ein Messgestänge 6, 7 und einen Winkelsensor 8 in ein elektrisches Eingangssignal umgesetzt.

Das Drucksignal wird mittels integriertem Drucksensor ermittelt. Aus diesem Signal kann auf den Beladungszustand des Fahrzeuges geschlossen werden, und aus diesem das Verhalten der Primärfederung errechnet werden.

Damit ist es mit der Erfindung auch möglich, die Höhe des Wagenkastens gegenüber dem Fahrweg zu ermitteln und diese Höhe genau einzustellen. Dies ist insbesondere beim Aufenthalt des Fahrzeuges in Bahnhöfen wichtig, um so Niveauunterschiede zwischen dem Boden des Wagenkastens und der Bahnsteigkante vermeiden zu können.

Während dieses Aufenthaltes ist überdies ein schnelles und genaues Höhenregelungsverhalten erwünscht, d.h. das Fahrzeug soll die durch das Aus- und Einsteigen der Passagiere bedingten Federwege möglichst schnell und genau ausgleichen.

Dieses mit hohem Luftbedarf verbundene Verhalten ist während der Fahrt unerwünscht, hier sollen vielmehr die durch Unregelmäßigkeiten im Fahrweg hervorgerufenen Erschütterungen möglichst weich durch die passiven Federungseigenschaften der Luftfedern kompensiert werden.

Die Betriebsmodi des Fahrzeuges, d.h. die unterschiedlichen Anforderungen an das Fahrzeug im Bahnhof und während der Fahrt stellen daher ebenfalls einen Zustandsparameter für die Steuerung des Höhenregelungsverhaltens der Luftfederanordnung dar.

Erfindungsgemäß werden diese Werte in diskrete Zustandsparameter mit einer begrenzten Zahl von Werten umgewandelt und zu einer begrenzten Zahl von Parametersätzen zusammengefasst.

Jedem Parametersatz wird nun ein definiertes Höhenregelungsverhalten zugewiesen, das im Wesentlichen durch die Eigenschaften des Proportionalventils 1 bestimmt ist, die näherungsweise durch die in Fig. 2 dargestellte Ventilkennlinien K1, K2 beschrieben werden.

Zu berücksichtigen ist dabei, dass diese Ventilkennlinien K1, K2 keinen linearen, sondern einen definierten stufenförmigen Verlauf aufweisen, wodurch das Höhenregelungsverhalten gezielt vorgegeben wird.

Die Ventilkennlinien K1, K2 beschreiben näherungsweise den Verlauf des Ventildurchflusses D1, D2 in Abhängigkeit vom Ventilwinkel VW, d.h. in Abhängigkeit von der Höhenlage des Wagenkastens relativ zum Fahrwerkrahmen. Durch Veränderung der Ventilkennlinie K1, K2 wird das Höhenregelungsverhalten der Luftfederanordnung verändert. Hohe Durchflussmengen kombiniert mit einem kleinen Bereich ohne Durchfluss wie in der ersten Kennlinie K1 dargestellt bedingen eine schnelle und genaue Höhenregelung, wie sie im Stationsbereich erwünscht ist, während geringe Durchflussmengen kombiniert mit einem großen Bereich ohne Durchfluss gemäß der Kennlinie K2 während der Fahrt gewünscht sind.

Die erfindungsgemäße Berücksichtigung des Beladungszustandes des Fahrzeuges bzw. des Verhaltens der Primärfederung führt in der grafischen Darstellung gemäß Fig. 2 dazu, dass die Ventilkennlinie K1 in Abhängigkeit vom gemessenen Druck im Luftfedersystem auf der Abszisse nach links verschoben wird. Dargestellt wird dies durch Verschieben der Ordinate D2 von einer zweiten Position, die der Referenzsituation der Primärfederung entspricht, zu einer Ordinate D1 der ersten Position, bei der auf Grund einer Beladungsänderung der Primärfederungszustand von der Referenzsituation abweicht.

## Patentansprüche

1. Verfahren zur Steuerung einer Luftfederanordnung eines Fahrzeuges, wobei aus dem Zustand des Fahrzeuges diskrete Zustandsparameter abgeleitet werden und durch entsprechende Ansteuerung zumindest eines Ventils (1) der Luftfederanordnung ein einem bestimmten Zustand des Fahrzeuges zugeordnetes Höhenregelungsverhalten eingestellt wird,
**dadurch gekennzeichnet, dass** das Ventil ein elektronisch steuerbares Proportionalventil(1)ist, dass die diskreten Zustandsparameter zu einer begrenzten Anzahl von Parametersätzen zusammengefasst werden und dass weiterhin jedem Parametersatz ein definiertes Höhenregelungsverhalten zugeordnet wird, wobei das Höhenregelungsverhalten durch Veränderung eines definierten stufenförmigen Verlaufs der Ventilkennlinien (K1, K2) des Proportionalventils (1) auf Basis der begrenzten Anzahl von Parametersätzen gezielt vorgegeben und eingestellt wird.

2. Verfahren zur Steuerung einer Luftfederanordnung nach Anspruch 1, **dadurch gekennzeichnet, dass** einer der diskreten Zustandsparameter aus einem Druckwert der Luftfederanordnung abgeleitet wird.

3. Verfahren zur Steuerung einer Luftfederanordnung nach Anspruch 1 oder 2, **dadurch gekennzeichnet, dass** einer der diskreten Zustandsparameter aus einem Betriebsmodus des Fahrzeuges abgeleitet wird.

4. Verfahren zur Steuerung einer Luftfederanordnung nach einem der Ansprüche 1 bis 3, **dadurch gekennzeichnet, dass** einer der diskreten Zustandsparameter aus einem Abstand eines Fahrzeugkastens von einem Fahrwerkrahmen abgeleitet wird.

5. Verfahren zur Steuerung einer Luftfederanordnung nach einem der Ansprüche 1 bis 4, **dadurch gekennzeichnet, dass** durch entsprechende Ansteuerung zumindest eines Ventils der Luftfederanordnung eine bestimmte Höhe des Wagenkastens gegenüber dem Fahrweg eingestellt wird, wobei aus einem Druckwert der Luftfederanordnung das Verhalten einer Primärfederung des Fahrwerkes abgeleitet wird.

6. Verfahren zur Steuerung einer Luftfederanordnung nach Anspruch 5, **dadurch gekennzeichnet, dass** das elektronisch steuerbares Proportionalventil (1) einen integrierten Drucksensor aufweist.

## Claims

1. Method for controlling a pneumatic spring assembly of a vehicle, wherein discrete state parameters are derived from the state of the vehicle, and a height regulation behaviour assigned to a specific state of the vehicle is set by the corresponding control of least one valve (1) of the pneumatic spring assembly
**characterised in that** the valve is an electronically-controllable proportional valve (1), the discrete state parameters are combined into a restricted number of parameter sets and furthermore each parameter set is assigned a defined height regulation behaviour, wherein the height regulation behaviour is explicitly predetermined and set by altering a defined stepped shape of the valve characteristic curve (K1, K2) of the proportional valve (1) on the basis of the restricted number of parameter sets.

2. Method for controlling a pneumatic spring assembly according to claim 1, **characterised in that** one of the discrete state parameters is derived from a pressure value of the pneumatic spring assembly.

3. Method for controlling a pneumatic spring assembly according to claim 1 or 2, **characterised in that** one of the discrete state parameters is derived from an operating mode of the vehicle.

4. Method for controlling a pneumatic spring assembly according to one of claims 1 to 3, **characterised in that** one of the discrete state parameters is derived from a distance between a vehicle body and a vehicle running gear frame.

5. Method for controlling a pneumatic spring assembly according to one of claims 1 to 4, **characterised in that**, by appropriate control the least one valve of the pneumatic spring assembly, a specific height of the body in relation to the track is set, wherein the behaviour of primary springing of the vehicle is derived from a pressure value of the pneumatic spring assembly.

6. Method for controlling a pneumatic spring assembly according to claim 5, **characterised in that** the electronically-controllable proportional valve (1) has an integrated pressure sensor.

## Revendications

1. Procédé destiné à la commande d'un agencement d'amortissement pneumatique d'un véhicule, dans lequel à partir de l'état du véhicule des paramètres d'état discrets sont déduits et par le biais d'une commande correspondante d'au moins une soupape (1) de l'agencement d'amortissement pneumatique comportement de réglage de la hauteur associé à un certain état du véhicule est réglé, **caractérisé en ce que** la soupape est une soupape proportionnelle (1) pouvant être commandée électroniquement, **en ce que** les paramètres d'état discrets sont regroupés dans un nombre limité d'ensembles de paramètres et **en ce que**, en outre, à chaque ensemble de paramètres est associé un comportement de réglage de la hauteur défini, dans lequel le comportement de réglage de la hauteur est prédéfini de manière ciblée et réglé par le biais de la modification d'un tracé par palier défini des courbes caractéristiques de soupape (K1, K2) de la soupape proportionnelle (1) sur la base du nombre limité d'ensembles de paramètres.

2. Procédé destiné à la commande d'un agencement d'amortissement selon la revendication 1, **caractérisé en ce que** l'un des paramètres d'état discrets est déduit à partir d'une valeur de pression de l'agencement d'amortissement.

3. Procédé destiné à la commande d'un agencement d'amortissement selon la revendication 1 ou 2, **caractérisé en ce que** l'un des paramètres d'état discrets est déduit à partir d'un mode de fonctionnement du véhicule.

4. Procédé destiné à la commande d'un agencement d'amortissement selon l'une des revendications 1 à 3, **caractérisé en ce que** l'un des paramètres d'état discrets est déduit à partir d'un écart entre une caisse de véhicule et un cadre de châssis.

5. Procédé destiné à la commande d'un agencement d'amortissement selon l'une des revendications 1 à 4, **caractérisé en ce que** par le biais de la commande correspondante d'au moins une soupape de l'agencement d'amortissement pneumatique une certaine hauteur de la caisse de véhicule est réglée par rapport à la voie de circulation, dans lequel à partir d'une valeur de pression de l'agencement d'amortissement pneumatique le comportement d'un amortissement primaire du châssis est déduit.

6. Procédé destiné à la commande d'un agencement d'amortissement selon la revendication 5, **caractérisé en ce que** la soupape proportionnelle (1) pouvant être commandée électroniquement présente un capteur de pression intégré.
